# EUROPÄISCHE PATENTSCHRIFT

(11) **EP 0 776 281 B1**
(45) Veröffentlichungstag und Bekanntmachung des Hinweises auf die Patenterteilung: **30.09.1998**
(21) Anmeldenummer: 95924969.9
(22) Anmeldetag: 04.07.1995
(51) Int. Cl.: B60R 13/04, B60R 13/06

(54) **ABDECKLEISTE FÜR EINE IN EINEM FAHRZEUGDACH BEFINDLICHE RINNE**
COVER STRIP FOR A VEHICLE ROOF GUTTER
BANDE DE PROTECTION POUR GOUTTIERE SITUEE SUR LE TOIT D'UN VEHICULE

(30) Priorität: 24.08.1994 DE 9413651 U
(43) Veröffentlichungstag der Anmeldung: 04.06.1997
(73) Patentinhaber: Erbslöh Aktiengesellschaft, 42553 Velbert (DE)
(72) Erfinder: BLOMBERG, Harald, D-42349 Wuppertal (DE)
(74) Vertreter: Ernicke, Hans-Dieter, Dipl.-Ing.
(86) Internationale Anmeldenummer: EP9502585
(87) Internationale Veröffentlichungsnummer: WO9605983

(56) Entgegenhaltungen:
- DE-A- 3 942 795
- DE-A- 4 237 158

## Beschreibung

Die Erfindung bezieht sich auf eine Abdeckleiste für eine in einem Fahrzeugdach befindliche Rinne mit darin befindlichen, durch Klappen verschließbare Öffnungen zur Aufnahme der Stützfüße eines Dachlastträgers mit den im Oberbegriff des Hauptanspruches aufgeführten Merkmalen.

Diese sind aus der DE-OS 42 37 158 bekannt.

Danach wird ein sich über die gesamte Länge der Klappe erstreckendes Federelement mit einem nach oben sich öffnenden U-förmigen Schenkelteil mit einem Profilsteg der Abdeckleiste diesen umgreifend festgelegt, der sich in die Rinne erstreckt. Das Federelement stützt sich mit dem Rand eines nach unten offenen U-förmigen Schenkels an einer Stufe eines anderen Profilsteges der Abdeckleiste ab. Die Ausdehnung dieses Schenkels des Federelementes ist breiter als die lichte Weite zwischen den Profilstegen, so daß sich beim Einsetzen des Federelementes an die Profilstege eine Vorspannung ergibt.

Die Klappe ist über Lagerstifte schwenkbar an der Abdeckleiste gelagert, wobei die Lagerstifte in passende Führungen sowohl der Klappe als auch der Abdeckleiste eingreifen. In der Klappe ist der Lagerstift schnappverschlußartig gehalten.

Das vorbekannte Federelement drückt mit einem aufrechten Steg gegen einen wulstartigen Rand der Klappe, in dessen Außenfläche sich eine rinnenförmige Vertiefung zur Bildung einer Drehsperre in der Öffnungsstellung befindet. In der Schließstellung drückt der Steg des Federelementes gegen einen Rand der wulstartigen Verdickung und fixiert damit die Schließstellung.

Die bekannte Anordnung erweist sich als problematisch, wenn das Fahrzeugdach bzw. die darin befindliche Rinne längs der Rinne eine Wölbung besitzt. In diesem Falle müßte nämlich sowohl die Klappe als auch das Federelement dieser Wölbung angepaßt werden, was spezielle Fertigungen der Federelemente für unterschiedlich gewölbte Fahrzeugdächer bedingt.

Ein weiteres Problem ergibt sich bei der vorbekannten Anordnung in der Überbrückung der unvermeidlichen Toleranzen hinsichtlich der Breite der Rinnen. Oftmals reicht die Vorspannung der eingesetzten Feder nicht aus, wenn die Rinne bzw. die Breite der Abdeckleiste ein Übermaß aufweisen.

Der Erfindung liegt daher die Aufgabe zugrunde, eine Abdeckleiste mit darin drehbar gelagerten Klappen so zu gestalten, daß die erwähnten Probleme nicht auftreten und eine Grundkonzeption geschaffen wird, die für Fahrzeugdächer unterschiedlicher Wölbung ohne Anpassungsnotwendigkeit verwendet werden kann.

Diese Aufgabe wird im Sinne der Erfindung mit den kennzeichnenden Merkmalen des Hauptanspruches gelöst.

Die Erfindung geht zunächst von dem Gedanken aus, statt dem einen vorbekannten Federelement je Klappe deren zwei zu verwenden, die an den Stirnbereichen der Klappe angeordnet werden. Wegen der relativen Kürze der erfindungsgemäßen Federelemente ist die Möglichkeit gegeben, mit ein und derselben Konstruktion sich an unterschiedlich gewölbte Fahrzeugdächer bzw. Rinnen anzupassen.

Ein weiteres wichtiges Merkmal der Erfindung besteht darin, daß die Lagerstifte nicht lose sondern starr mit der Klappe verbunden sind. Dies geschieht am besten dadurch, daß Klappe und Lagerstifte als einteiliges Gußelement ausgebildet werden. Der über den Stirnbereich der Klappe hinausragende Teil des Lagerstiftes wird dann lose in einer passenden Führung der Abdeckleiste zentriert und vom Federelement ständig in diese Führung eingedrückt.

Das Federelement besteht erfindungsgemäß aus einem Stützteil und einem Andrückteil. Das Stützteil ist dazu bestimmt, abseits der Klappe bzw. der Öffnung an den Profilstegen der Abdeckleiste mit hoher Vorspannung fixiert zu werden. Diese hohe Vorspannung reicht auch aus, den Lagerstift ständig in seiner Führung zu halten. Ein an das Stützteil anschließendes Andrückteil des Federelementes greift unter die Klappe und wirkt auf diese nahe ihrer Lagerachse ein, wie dies auch aus der DE-OS 42 37 158 mit Hilfe angeformter Laschen bekannt ist. Allerdings wird durch die erfindungsgemäße Ausbildung eine wesentlich größere Federkraft erzeugt, weil das erfindungsgemäße Andrückteil über seine gesamte Länge auf die Klappe einwirkt.

In den Unteransprüchen sind vorteilhafte Ausgestaltungen der Erfindung offenbart. In den Ansprüchen 2 und 3 wird gelehrt, wie die aufrechten Stege des Stützteiles und des Andrückteiles des Federelementes ausgebildet werden sollten, um einerseits die Lage des Federelementes zu fixieren und andererseits die notwendige Federkraft für die gestellte Aufgabe zu entwickeln.

Die Merkmale des Anspruches 4 sind darauf abgestellt, die Lage des Federelementes an der Abdeckleiste zu sichern und eine Verschiebung des Federelementes in axialer Richtung der Rinne zu vermeiden.

Die Merkmale des Anspruches 5 besitzen eigenen Erfindungscharakter. Danach ist in dem an der Unterseite der Abdeckleiste anliegenden Schenkel des Stützteiles des Federelementes eine nach unten ragende U-förmige Einbauchung vorgesehen. Diese Einbauchung besitzt in der entspannten Stellung des Federelementes eine etwa V-Form. Im eingesetzten Zustand nimmt diese Einbauchung eine U-Form ein, welche eine erhebliche Vorspannung des Federelementes verursacht. Auf diese Weise wird eine sichere Verankerung des Federelementes in der Abdeckleiste herbeigeführt. Diese Vorspannung gleicht auch Toleranzunterschiede in der Breite der Abdeckleiste bzw. der Rinne mühelos aus. Schließlich wird diese erhebliche Vorspannung auch auf das Andrückteil des Federelementes übertragen und diesem Andrückteil die nötige Federkraft vermittelt, um die Klappe sowohl in der Schließstellung als auch in der Öffnungsstellung sicher zu fixieren.

Der Anspruch 6 befaßt sich mit einer vorteilhaften Gestaltung des aufrechten Steges des Federelementes, um dessen federnden Charakter zu verbessern.

Die Ansprüche 7 und 8 zeigen einfache und zweckmäßige Ausbildungen des aufrechten Steges, um einen besseren Sitz des Federelementes am Profilsteg der Abdeckleiste zu erreichen.

Diese und weitere Merkmale sind in der Erfindung schematisch und beispielsweise dargestellt. Es zeigen:
- Figur 1:: einen Querschnitt durch eine Rinne eines Fahrzeugdaches mit Abdeckleiste und Klappe,
- Figur 2:: eine perspektivische Ansicht eines Federelementes,
- Figur 3:: einen Querschnitt durch die Rinne mit geöffneter Klappe,
- Figur 4:: einen Querschnitt durch die Rinne gemäß Figuren 1 und 3 mit teilweise geöffneter Klappe,
- Figuren 5 und 6:: Stirnansichten des Federelementes gemäß Figur 2 in entspannter und gespannter Lage und
- Figuren 7 und 8:: Ausführungsformen des Federelementes im Vergleich zu den Figuren 2 und 5.

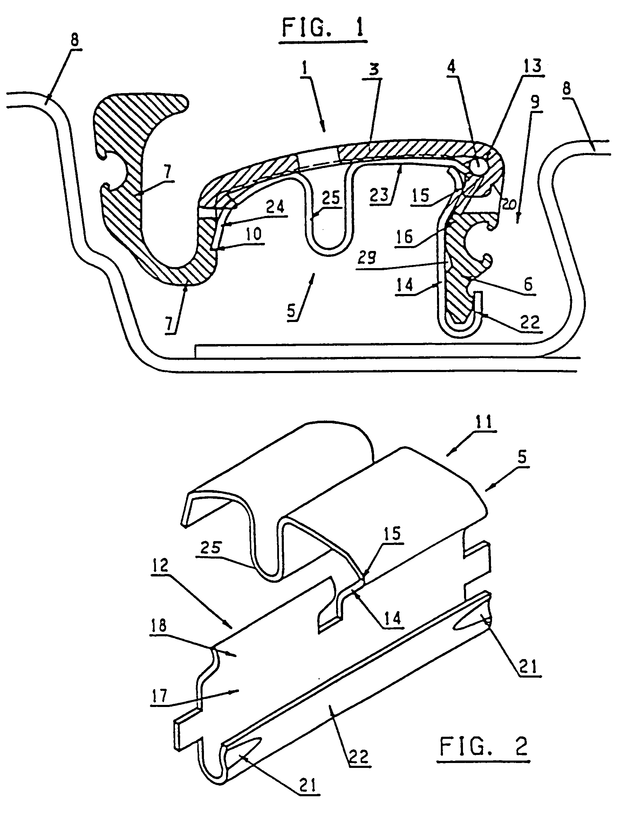

Im Ausführungsbeispiel der Figur 1 ist mit (1) eine Abdeckleiste, teilweise im Schnitt, gezeigt, welche eine Rinne (9) eines Fahrzeugdaches (8) nach oben hin abdecken soll. Diese Abdeckleiste (1) ist der Wölbung des Fahrzeugdaches (8) angepaßt und durch in der Zeichnung nicht dargestellte Elemente fest mit dem Rinnenboden verankert.

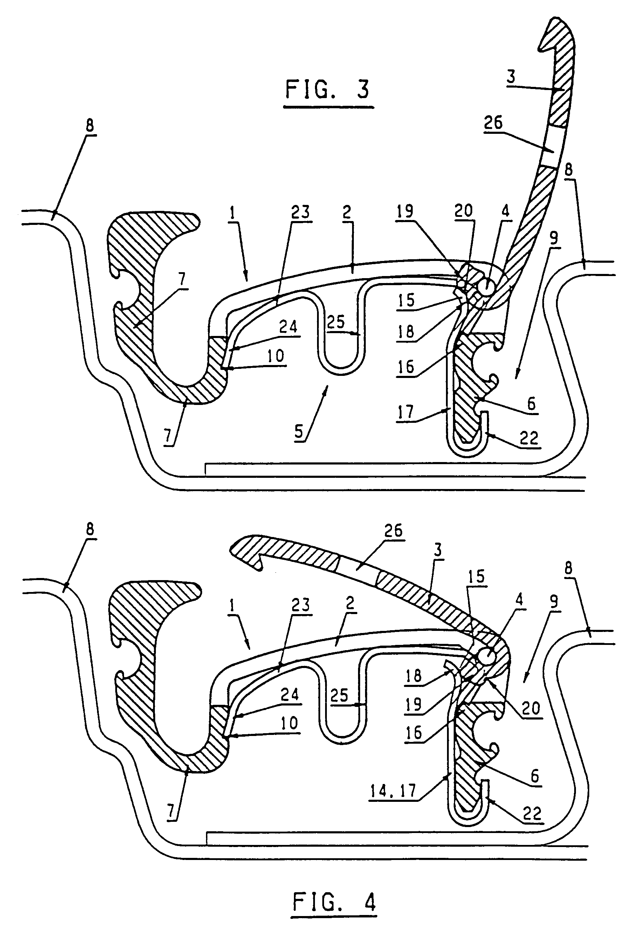

In der Abdeckleiste (1) befinden sich stellenweise Öffnungen (2) (vgl. Figur 3), welche durch Klappen (3) verschlossen werden müssen. Diese Klappen (3) sind mittels Lagerstiften (4) an der Abdeckleiste (1) beidseits der Öffnung (2) gelagert.

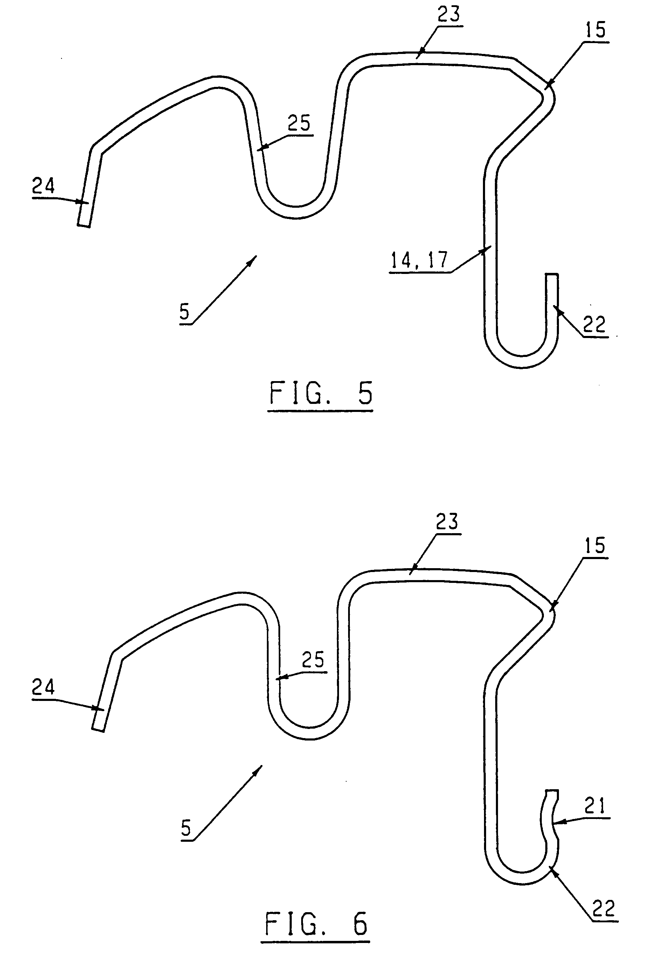

Beim Ausführungsbeispiel der Erfindung sind die Lagerstifte (4) mit der Klappe (3) starr verbunden, beispielsweise dadurch, daß Klappe (3) und Lagerstift (4) ein einteiliges Gußelement sind. Die Lagerstifte (4) ragen über die Ränder der Klappe (3) hinaus und sind in passenden Führungen (13) der Abdeckleiste (1) zentriert und gelagert. Diese Führungen (13) sind nach der Innenseite der Abdeckleiste (1) offen, so daß der Lagerstift (4) aus der Führung (13) gelangen kann. Um dies zu verhindern, ist ein Federelement (5) vorgesehen, dessen Gestaltung in Figur 2 perspektivisch und in den Figuren 5 und 6 in Stirnansicht dargestellt ist.

Jede Klappe (3) ist mit zwei Federelementen (5) versehen, die an den beiden Stirnbereichen der Klappe (3) angeordnet sind. Jedes Federelement (5) weist ein Stützteil (11) und ein Andrückteil (12) auf (vgl. Figur 2). Mit dem Stützteil (11) greift das Federelement (5) in den an die Öffnung (2) angrenzenden Bereich der Abdeckleiste (1) ein. Das Andrückteil (12) befindet sich jedoch unterhalb der Klappe (3) und hat die Aufgabe, die Klappe (3) in ihrer Schließstellung gemäß Figur (1) bzw. in der Öffnungsstellung gemäß Figur 3 zu fixieren.

Das Federelement (5) besitzt einen durchgehenden U-förmigen Schenkel (22), der sich nach oben hin öffnet. Die Schenkel (22) sind dazu bestimmt, den unteren Rand eines Profilsteges (6) der Abdeckleiste (1) von unten her zu umgreifen. Dieser Profilsteg (6) ragt in die Rinne (9) hinein. Die Dimensionierung dieses U-förmigen Schenkels (22) ist so bemessen, daß eine Klemmwirkung am Profilsteg (6) erfolgt. Damit aber das Federelement (5) nicht nach unten vom Profilsteg (6) abrutschen kann, ist der aufrechte Steg (14) des Stützteiles (11) des Federelementes (5) mit einer konvexen Ausbuchtung (15) versehen, deren unterer Bereich sich an einer Schulter (16) des Profilsteges (6) abstützt und damit eine Sperre gegen senkrechtes Verschieben des Federelementes (5) bildet. Diese konvexe Ausbuchtung (15) hat außerdem die Funktion, mit ihrem oberen Teil unmittelbar gegen den Lagerstift (4) zu wirken und damit diesen Lagerstift (4) in seine Führung (13) einzudrücken.

Das Federelement (5) besitzt in Bereich des Stützteiles (11) einen an der Innenseite der Abdeckleiste (1) anliegenden Schenkel (23), der sich bis zu einem anderen Profilsteg (7) der Abdeckleiste (1) erstreckt, der ebenfalls in die Rinne (9) ragt. An der Innenfläche dieses Profilsteges (11) befindet sich eine Stufe (10), in welche der Schenkelrand (24) des Schenkels (23) eingreift und damit eine Abstützung des Federelementes (5) ermöglicht.

Die in Figur 5 dargestellte entspannte Lage des Federelementes (5) weist eine größere Breite als die lichte Weite zwischen den Profilstegen (6) und (7) auf. Das Federelement (5) muß also erheblich im Bereiche seines Stützteiles (11) zusammengedrückt werden, um die Lagefixierung an den Profilstegen (6, 7) zu erreichen.

Ein wesentlicher Gegenstand der Erfindung ist die in den Figuren 1, 3 und 4 gezeigte U-förmige Einbuchtung (25) des Schenkels (23) des Federelementes (5). Wie die Figur 5 zeigt, ist die Einbuchtung (25) etwa V-förmig ausgebildet, wenn das Federelement (5) entspannt ist. Im eingebauten Zustand gemäß den Figuren 1, 3 und 4 bzw. 6 nimmt die Einbuchtung (25) eine U-Form ein, wodurch eine ganz erhebliche Spreizkraft in das Federelement (5) eingebracht wird. Diese Spreizkraft gleicht Toleranzunterschiede hinsichtlich des Abstandes der Profilstege (6, 7) aus. Andererseits wird auf die aufrechten Stege (14, 17) des Federelements (5) eine erhebliche Spannkraft übertragen. Diese Spannkraft ist, wie eingangs erwähnt, zunächst dazu notwendig, um den Lagerstift (4) in seiner Führung (13) ständig zu fixieren.

Andererseits wird die erhebliche Spreizkraft auch auf einen aufrechten Steg (17) des Andrückteiles (12) übertragen, der an der Innenseite des Profilsteges (6) unter Federkraft anliegt und mit seinem oberen konvexen Rand (18) gegen einen wulstartigen Rand (19) der Klappe (3) wirkt. In diesem wulstartigen Rand (19) befindet sich eine rinnenartige Einbuchtung (20), in welche der konvexe Rand (18) des aufrechten Steges (17) eindringt, wenn die Klappe (3) ihre Öffnungsstellung gemäß Figur 3 erreicht hat.

Eine andere Einbuchtung ist schematisch in Figur 1 dargestellt. Diese dient dazu, die Klappe (3) in ihrer Schließstellung zu halten. Entscheidend ist der Hebelarm, bezogen auf die durch den Lagerstift (4) gebildete Schwenkachse der Klappe (3).

Der aufrechte Steg (17) des Andrückteiles (12) liegt mit Federkraft an der Innenseite des Profilsteges (6) an. Diese Federkraft wird aus der Vorspannung der U-förmigen Einbuchtung (25) des Federelementes (5) erzeugt. Dadurch erreicht der konvexe Rand (18) des aufrechten Steges (17) des Andrückteiles (12) auch die nötige Andrückkraft gegen den wulstartigen Rand (19) der Klappe (3).

In der Klappe (3) befindet sich mittig ein länglicher Ausschnitt (26), in den beispielsweise eine Münze eingeführt werden kann, um die Klappe (3) zu öffnen.

In übrigen kann von unten in die Abdeckleiste (1) ein Werkzeug bis in den Bereich des Federelementes (5) geführt werden, mit dessen Hilfe die U-förmige Ausbuchtung (25) weiter eingeengt werden kann, damit der Schenkelrand (24) aus der Abstützung der Stufe (10) gelangen kann. Dadurch wird das Federelement (5) entlastet und die Möglichkeit gegeben, die Klappe (3) zu demontieren.

Die in Figur 2 gezeigten, sich verjüngenden Einprägungen (21) in dem den Profilsteg (6) der Abdeckleiste (1) U-förmig umgreifenden Schenkel (22) des Federelementes (5) dienen dazu, einen Widerstand gegen die Verschiebung des Federelementes (5) in beiden Richtungen längs des Profilsteges zu bilden.

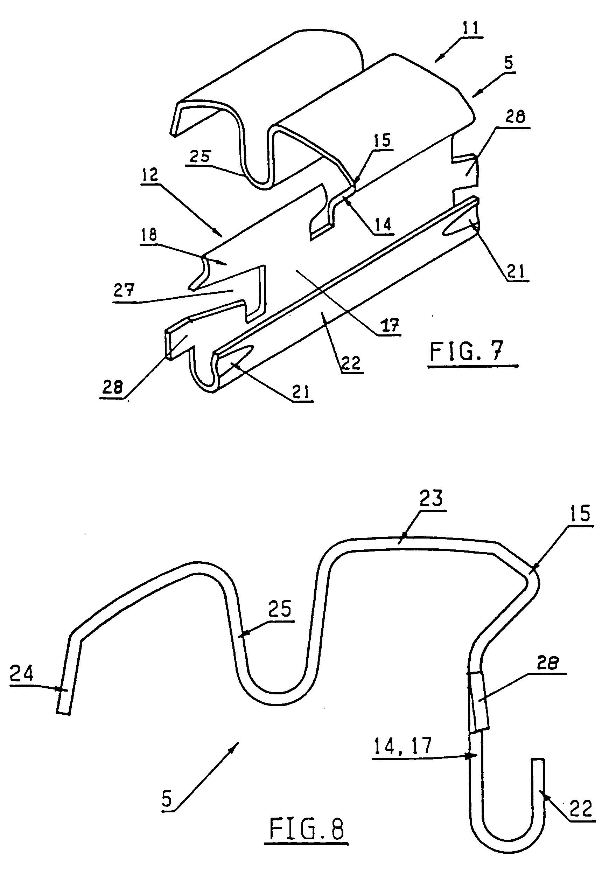

Die Figuren 7 und 8 zeigen wirksame Weiterentwicklungen des Federelementes (5) gegenüber den Ausführungsbeispielen der Figuren 2 und 5.

Im Beispiel der Figur 7 befindet sich im aufrechten Steg (17) des Andrückteils (12) unterhalb des konvexen Randes (18) eine Ausnehmung (27), durch welche das Andrückteil (12) und besonders der konvexe Rand (18) einen verbesserten federartigen Charakter erhalten. Somit kann der Steg (17) Schwenkbewegungen der Klappe (3) besser ausgleichen und sich anschmiegen.

Das Beispiel der Figur 8 zeigt die besonders gekröpfte Ausbildung von Haltelaschen (28), die sich an beiden stirnseitigen Rändern des Federelementes (5) befinden. Die Kröpfungen sind gegen den Profilsteg (6) der Abdeckleiste (1) (vgl. Figur 1) gerichtet und verbessern den Sitz des Federelementes (5), indem sie außerdem in die in Figur 1 dargestellte Nut (29) einrasten.

### STÜCKLISTE

- 1: Abdeckleiste
- 2: Öffnung
- 3: Klappe
- 4: Lagerstift
- 5: Federelement
- 6: Profilsteg
- 7: Profilsteg
- 8: Fahrzeugdach
- 9: Rinne
- 10: Stufe
- 11: Stützteil
- 12: Andrückteil
- 13: Führung
- 14: aufrechter Steg des Stützteils
- 15: konvexe Ausbuchtung
- 16: Schulter
- 17: aufrechter Steg des Andrückteils
- 18: konvexer Rand
- 19: wulstartiger Rand
- 20: Einbuchtung
- 21: Einprägung
- 22: U-förmiger Schenkel
- 23: Schenkel
- 24: Schenkelrand
- 25: U-förmige Einbauchung
- 26: Ausschnitt
- 27: Ausnehmung
- 28: Haltelasche
- 29: Nut

## Patentansprüche

1. Abdeckleiste (1) für eine in einem Fahrzeugdach (8) befindliche Rinne (9) mit darin befindlichen, durch Klappen (3) verschließbare Öffnungen (2) zur Aufnahme der Stützfüße eines Dachlastträgers, wobei die einzelne Klappe (3) über seitliche vorstehende Lagerstifte (4) in passenden Führungen (13) der Abdeckleiste (1) schwenkbar gelagert und durch eine Federanordnung (5) in ihrer Schließ- und Öffnungsstellung gehalten ist und die Federanordnung (5) an einem in die Rinne (9) eintauchenden Profilsteg(6) der Abdeckleiste (1) diesen U-förmig umgreifend verankert und an einem anderen Profilsteg (7) der Abdeckleiste (1) unter Vorspannung abgestützt sowie mit einer Lasche (12) versehen ist, die gegen Bereiche der Klappe (3) anschlagbildend federnd angestellt ist, dadurch **gekennzeichnet**, daß je Klappe (3) zwei Federelemente (5) an deren Endbereichen vorgesehen sind, die jeweils ein an den Profilstegen (6, 7) der Abdeckleiste (1) neben der Öffnung (2) verankertes Stützteil (11) und ein daran anschließendes, bis unter die Klappe (3) ragendes Andrückteil (12) aufweisen, wobei das Stützteil (11) den starr an der Klappe (3) angeordneten Lagerstift (4) in seine Führung (13) drückt und das Andrückteil (12) auf die Klappe (3) nahe ihrer Lagerachse einwirkt.

2. Abdeckleiste nach Anspruch 1, dadurch **gekennzeichnet**, daß das Stützteil (11) am oberen Ende seines längs des Profilsteges (6) der Abdeckleiste (1) sich erstreckenden aufrechten Steges (14) eine konvexe Ausbuchtung (15) aufweist, deren oberer Bereich am Lagerstift (4) anliegt und deren unterer Bereich an einer Schulter (16) des Profilsteges (6) lagezentrierend abgestützt ist.

3. Abdeckleiste nach Anspruch 1 oder 2, dadurch **gekennzeichnet**, daß das Andrückteil (12) mit seinem aufrechten Steg (17) an der Innenseite des Profilsteges (6) federnd anliegt und mit seinem ebenfalls konvex geformten oberen Rand (18) an einem wulstartig geformten Rand (19) der Klappe (3) anliegt, in dem sich eine die Öffnungsstellung der Klappe (3) fixierende Einbuchtung (20) befindet.

4. Abdeckleiste nach einem der Ansprüche 1 bis 3 dadurch **gekennzeichnet**, daß an den Stirnbereichen des den Profilsteg (6) der Abdeckleiste (1) U-förmig umgreifenden Schenkels (22) des Federelementes (5) vom Rand zur Mitte sich verjüngende Einprägungen (21) zur Bildung eines Widerstandes gegen Verschiebung des Federelementes (5) vorgesehen sind.

5. Abdeckleiste, insbesondere nach Anspruch 1, dadurch **gekennzeichnet**, daß in dem an der Unterseite der Abdeckleiste (1) anliegenden Schenkel (23) des Stützteiles (11) des Federelementes (5) eine nach unten ragende U-förmige Einbauchung (25) vorgesehen ist.

6. Abdeckleiste nach einem der Ansprüche 1 bis 5, dadurch **gekennzeichnet**, daß in dem aufrechten Steg (17) des Andrückteiles (12) unterhalb des konvexen Randes (18) eine Ausnehmung (27) zur Verbesserung der federnden Eigenschaft des Steges (17) vorgesehen ist.

7. Abdeckleiste nach einem der Ansprüche 1 bis 6, dadurch **gekennzeichnet**, daß an den stirnseitigen Enden des aufrechten Steges (17) in Achsrichtung der Rinne (9) vorstehende und gegen den aufrechten Steg (17) abgekröpfte Haltelaschen (28) vorgesehen sind.

8. Abdeckleiste nach Anspruch 7, dadurch **gekennzeichnet**, daß die Haltelasche in einer sich längs der Rinne (9) erstreckende Nut (29) an der zugeordneten Außenseite des aufrechten Steges (17) federnd eingreift.

## Claims

1. Cover strip (1) for a gutter (9) in a vehicle roof (8), with openings (2) therein, closable by flaps (3), for receiving the supporting feet of a roof rack, the individual flap (3) being pivotably mounted by way of laterally protruding bearing pins (4) in mating guides (13) of the cover strip (1) and being retained in its closed and open position by a spring arrangement (5) and the spring arrangement (5) being anchored on a profiled web (6), submerged in the gutter (9), of the cover strip (1) in such a way as to embrace this profiled web in a U-shaped manner and being supported with preloading on another profiled web (7) of the cover strip (1) and also being provided with a tab (12) which is placed against regions of the flap (3) in a stop-forming resilient manner, characterized in that for each flap (3) there are provided at the end regions thereof two spring elements (5) which each have a supporting part (11) anchored on the profiled webs (6, 7) of the cover strip (1) beside the opening (2) and a pressing part (12) adjoining the supporting part and projecting beneath the flap (3), the supporting part (11) pressing the bearing pin (4), arranged rigidly on the flap (3), into its guide (13) and the pressing part (12) acting on the flap (3) close to its bearing axis.

2. Cover strip according to Claim 1, characterized in that the supporting part (11) has, at the upper end of its upright web (14) extending along the profiled web (6) of the cover strip (1), a convex bulge (15), the upper region of which bears on the bearing pin (4) and the lower region of which is supported in a position-centring manner on a shoulder (16) of the profiled web (6).

3. Cover strip according to Claim 1 or 2, characterized in that the pressing part (12) bears, by its upright web (17), resiliently on the inner side of the profiled web (6) and bears, by its likewise convexly shaped upper edge (18), on a beadlike-shaped edge (19) of the flap (3), in which beadlike-shaped edge there is an indentation (20) which fixes the flap (3) in the open position.

4. Cover strip according to one of Claims 1 to 3, characterized in that impressions (21), which taper from the edge to the middle, are provided at the end regions of the leg (22) of the spring element (5) embracing the profiled web (6) of the cover strip (1) in a U-shaped manner, to form a resistance against displacement of the spring element (5).

5. Cover strip, in particular according to Claim 1, characterized in that a downwardly projecting U-shaped indentation (25) is provided in the leg (23) of the supporting part (11) of the spring element (5) bearing on the underside of the cover strip (1).

6. Cover strip according to one of Claims 1 to 5, characterized in that a recess (27) is provided in the upright web (17) of the pressing part (12) below the convex edge (18), to improve the resilient property of the web (17).

7. Cover strip according to one of Claims 1 to 6, characterized in that retaining tabs (28) are provided at the end faces of the upright web (17), which protrude in the axial direction of the gutter (9) and are bent off from the upright web (17).

8. Cover strip according to Claim 7, characterized in that the retaining tab engages resiliently in a groove (29), extending along the gutter (9), at the associated outer side of the upright web (17) [sic].

## Revendications

1. Baguette de recouvrement (1) d'une rainure (9) se trouvant sur le toit (8) d'un véhicule, comprenant des ouvertures (2) pouvant être fermées par des volets (3) et destinées à recevoir les pieds d'appui d'une galerie de toit, chaque volet (3) étant monté à pivotement, au moyen d'axes de montage (4) dépassant sur les côtés, dans des guides adaptés (13) de la baguette de recouvrement (1) et étant maintenu dans sa position d'ouverture et dans sa position de fermeture par un ensemble de ressort (5), et l'ensemble de ressort (5) étant arrimé, sur une branche profilée (6) de la baguette de recouvrement (1) qui pénétre dans la rainure (9), en l'entourant en U, et s'appuyant sous précontrainte contre une autre branche profilée (7) de la baguette de recouvrement (1) et étant en outre pourvu d'une patte (12) qui est appliquée élastiquement contre des régions du volet (3) en formant une butée, **caractérisée** en ce que deux éléments de ressort (5) sont prévus sur les régions terminales de chaque volet (3), éléments qui présentent chacun une partie d'appui (11) qui est arrimée sur les branches profilées (6, 7) de la baguette de recouvrement (1) à côté de l'ouverture (2) et à laquelle se raccorde une partie de pression (12) s'étendant jusqu'en dessous du volet (3), la partie d'appui (11) repoussant l'axe de montage (4), disposé rigidement sur le volet (3), dans son guide (13) et la partie de pression (12) agissant sur le volet (3) à proximité de l'axe longitudinal de ce dernier.

2. Baguette de recouvrement selon la revendication 1, **caractérisée** en ce que la partie d'appui (11) présente, à l'extrémité supérieure de sa branche verticale (14) s'étendant le long de la branche profilée (6) de la baguette de recouvrement (1), une échancrure convexe (15) dont la région supérieure s'applique contre l'axe de montage (4) et dont la région inférieure est appuyée en position centrée contre un épaulement (16) de la branche profilée (6).

3. Baguette de recouvrement selon la revendication 1 ou 2, **caractérisée** en ce que la partie de pression (12) s'applique élastiquement contre le côté intérieur de la branche profilée (6) par sa branche verticale (17) et, par son bord supérieur (18) également de forme convexe, s'applique contre un bord (19) en forme de bourrelet du volet (3), dans lequel se trouve une indentation (20) fixant la position d'ouverture du volet (3).

4. Baguette de recouvrement selon l'une des revendications 1 à 3, **caractérisée** en ce que sont prévues, sur les régions frontales de la branche (22) de l'élément de ressort (5) qui entoure en U la branche profilée (6) de la baguette de recouvrement (1), des régions repoussées (21) qui se rétrécissent des bords vers le milieu et sont destinées à former une résistance contre le déplacement de l'élément de ressort (5).

5. Baguette de recouvrement, notamment selon la revendication 1, **caractérisée** en ce qu'une indentation (25) en U et dépassant vers le bas est prévue dans la branche (23) de la partie d'appui (11) de l'élément de ressort (5) qui s'applique contre le dessous de la baguette de recouvrement (1).

6. Baguette de recouvrement selon l'une des revendications 1 à 5, **caractérisée** en ce qu'un évidement (27) est prévu dans la branche verticale (17) de la partie de pression (12) en dessous du bord convexe (18) afin d'améliorer les propriétés élastiques de la branche (17).

7. Baguette de recouvrement selon l'une des revendications 1 à 6, **caractérisée** en ce que des pattes de maintien (28), dépassant dans la direction axiale de la rainure (9) et coudées vers la branche verticale (17), sont prévues sur les extrémités frontales de la branche verticale (17).

8. Baguette de recouvrement selon la revendication 7, **caractérisée** en ce que la patte de maintien s'engage élastiquement dans une gorge (29) s'étendant le long de la rainure (9) sur le côté extérieur associé de la branche verticale (17).
